# EUROPÄISCHE PATENTSCHRIFT

(11) **EP 1 740 801 B1**
(45) Veröffentlichungstag und Bekanntmachung des Hinweises auf die Patenterteilung: **09.04.2008**
(21) Anmeldenummer: 05706683.9
(22) Anmeldetag: 14.01.2005
(51) Int. Cl.: F01M 11/06, F16N 19/00, B65D 1/40

(54) **BEHÄLTER FÜR ÖLE ODER FLÜSSIGKEITEN ZUR BEFESTIGUNG AN EINER BEFESTIGUNGSFLÄCHE**
OIL OR LIQUID CONTAINER WHICH CAN BE DIRECTLY FIXED TO A FIXING SURFACE
CONTENANT POUR HUILES OU AUTRES LIQUIDES, DESTINE A ETRE FIXE DIRECTEMENT SUR UNE SURFACE DE FIXATION

(30) Priorität: 14.01.2004 DE 102004002108
(43) Veröffentlichungstag der Anmeldung: 10.01.2007
(73) Patentinhaber: ZF FRIEDRICHSHAFEN Aktiengesellschaft, 88038 Friedrichshafen (DE)
(72) Erfinder: WAGENER, Keit, 49143 Bissendorf (DE); LINDECKERT, Peter, 70329 Stuttgart (DE)
(86) Internationale Anmeldenummer: PCT/DE2005/000052
(87) Internationale Veröffentlichungsnummer: WO 2005/068795

(56) Entgegenhaltungen:
- EP-A- 0 767 104
- WO-A-02/44074
- WO-A-93/06365
- DD-A5- 123 984
- DE-A1- 4 010 946

## Beschreibung

Die Erfindung betrifft einen zur direkten Befestigung an einer Befestigungsfläche ausgebildeten Behälter für Öle oder Flüssigkeiten. Entsprechend einer Ausführungsform bezieht sie sich im Speziellen auf einen Ölbehälter zur Befestigung an einem Fahrzeug, vorzugsweise an einem Kraftfahrzeugmotor.

In Kraftfahrzeugen werden, abgesehen vom Kraftstofftank, an unterschiedlichen Stellen Behälter für Öle und/oder Flüssigkeiten verbaut. Die Behälter werden beispielsweise als Ölreservoir benötigt, um ein vorgegebenes Umlaufvolumen für das Öl in einem Ölkreislauf zu realisieren. Als Ölbehälter finden sie unter anderem Verwendung im Zusammenhang mit dem Ölkreislauf einer Servolenkung oder aber auch mit der Schmierung und Kühlung eines Kraftfahrzeugmotors. Im letztgenannten Fall dienen sie auch dazu sicherzustellen, dass das zur Kühlung des Motors verwendete Öl hinreichend Verweilzeit abseits des heißen Motors hat, um die von ihm abtransportierte Wärme an die Umgebung abzugeben. Nur so kann sich das Öl selbst wieder abkühlen und dadurch seiner Kühlfunktion gerecht werden.

Nach dem Stand der Technik werden entsprechende Behälter, also beispielsweise Ölbehälter, mittels Spannbändern, einer formschlüssigen Verbindung zu einem Blechhalter, über Spannstifte oder durch eine Direktverschraubung an der jeweiligen Befestigungsfläche befestigt. Zur Befestigung mittels Schrauben werden dabei am Behälterumfang Durchführungen für die Schrauben vorgesehen. Dazu wird der Behälter entweder mit einem umlaufenden Kragen versehen, auf dem im Abstand Bohrungen für die Schrauben vorgesehen sind oder es werden mehrere Ösen am Umfang des Behälters angeordnet. Ein gattungsgemäßer Behälter wird beispielsweise in der DE 100 37 856 A1 offenbart. Die Schrift betrifft einen Ölbehälter zur Optimierung des Ölhaushaltes eines Verbrennungsmotors oder eines Getriebes sowie ein Verfahren zu dessen Herstellung. Bei dem beschriebenen Behälter sind auf der Umfangsfläche mehrere Ösen für zur Befestigung des Behälters dienende Schrauben angeordnet.

Des Weiteren zeigt die DE 40 10 946 A1 einen unterhalb des Motorbodens angeordneten Ölbehälter. Die Schrauben werden über Durchganglöcher durch den Behälter geführt. Bei der hier vorliegenden Einbauweise ist sowohl für den Behälter als auch für die Montage von ausreichend vorhandenem Platz auszugehen.

Die DD 123 984 A5 zeigt einen Heizöltank, der aufgrund der Menge an eingefülltem Fluid (Heizöl) einer hohen Belastung ausgesetzt ist. Das Ausbauchen wird bei diesem Behälter dadurch unterbunden, dass der Behälter an zumindest einer seiner Stoßflächen mit einer umlaufenden Vertiefung versehen ist. Dies bewirkt eine Stabilität des Tanks.

Die EP 0 767 104 A1 zeigt eine Ölflasche, die mit einem Durchbruch ausgestattet ist. Dieser Durchbruch gestattet das Eingreifen per Hand zur besseren Handhabung des Behälters.

Ein Problem ist insbesondere im Fahrzeugbau dadurch gegeben, dass häufig ein sehr begrenzter Bauraum für die zu montierenden Komponenten zur Verfügung steht. Insoweit erweist sich diese bekannte Verfahrensweise zur Ausbildung von Behältern mit Befestigungsmöglichkeit als nicht sehr platzsparend.

Aufgabe der Erfindung ist es daher, einen Behälter zur Aufnahme von Ölen oder Flüssigkeiten so auszubilden, dass dieser bei ausreichendem Behältervolumen platzsparend und mit zuverlässigem Halt an einer Befestigungsfläche montierbar ist, derart, dass dieser durch eine entsprechende konstruktive Ausgestaltung die einfache Montage insbesondere an schwer zugänglichen Stellen möglich ist.

Die Aufgabe wird durch einen Behälter mit den Merkmalen des Hauptanspruchs gelöst. Vorteilhafte Aus- bzw. Weiterbildungen der Erfindung sind durch die Unteransprüche gegeben.

Der erfindungsgemäße Behälter für Öle oder Flüssigkeiten wird mittels direkt an der vorgesehenen Befestigungsfläche angreifender Befestigungsmittel befestigt. In erfindungswesentlicher Weise ist dabei wenigstens eines der direkt an der Befestigungsfläche angreifenden Befestigungsmittel durch das Behältervolumen hindurchgeführt. Hierdurch wird das Volumen, welches für das vom Behälter aufzunehmende Fluid zur Verfügung steht, nicht nennenswert verringert, aber gleichzeitig nach außen eine sehr kompakte und hierdurch platzsparend zu verbauende Form für den Behälter erhalten.

Weiter handelt es sich bei dem Behälter um einen Ölbehälter zur Befestigung an einem Kraftfahrzeug, vorzugsweise am Kraftfahrzeugmotor, wobei der Behälter wenigstens eine durch das Behältervolumen geführte Verschraubung aufweist. Auch wenn der Behälter gegebenenfalls zur Montage am Kraftfahrzeugmotor vorgesehen ist, muss es sich dabei nicht zwingend um einen Behälter für das Motoröl handeln. Vielmehr ist es zum Beispiel auch denkbar, einen in der erfindungsgemäßen Weise ausgebildeten Ölbehälter für eine Servolenkung am Kraftfahrzeugmotor zu befestigen.

Der Behälter mittels Schrauben an der Befestigungsfläche zu befestigen, welche durch am und/oder im Behälter angeordnete Durchführungskanäle geführt sind. Im Sinne der Erfindung verläuft dabei wenigstens einer der Durchführungskanäle für die Schrauben durch das Behältervolumen, so dass der Behälter platzsparend und durch die gegebenenfalls zentrale Anordnung des entsprechenden Durchführungskanals sicher mit der durch diesen Kanal geführten Schraube befestigt werden kann. Dabei erfolgt die Befestigung entweder mittels selbstfurchender bzw. selbstschneidender Schrauben, die in entsprechende Bohrungen im Bereich der Befestigungsfläche eingreifen oder um Schrauben, die in vorgeschnittene Gewinde eingeschraubt werden.

Der Behälter besteht weiter aus einem schalenförmigen Behälterteil und einem darauf aufgeschweißten Behälterdeckel und umfasst einen Befüllstutzen zur Einbringung des jeweiligen Fluids sowie zwei Anschlussstutzen zur Einordnung des Behälters in einen Öl- oder Flüssigkeitskreislauf. Die Befestigung des Behälters erfolgt mittels wenigstens einer in einem Durchführungskanal durch den Behälter geführten Schraube und weiterer durch Durchführungskanäle am Außenumfang des schalenförmigen Behälterteils geführter Schrauben. In vorteilhafter Weise sind dabei die am Umfang des schalenförmigen Behälterteils angeordneten Durchführungskanäle gegenüber der Tiefe dieses Behälterteils verkürzt. Gleichzeitig sind auf dem Umfang des Behälterdeckels, im Bereich der Durchführungskanäle, Ausnehmungen vorgesehen, welche zwar für ein Werkzeug, nicht aber für den Kopf einer zur Befestigung des Behälters dienenden Schraube passierbar sind. Auf diese Weise wird eine Verliersicherung ausgebildet, welches ein ungewolltes Herausgleiten der in die Durchführungskanäle eingeführten Schrauben verhindert. Vorzugsweise sind bei dieser Ausgestaltungsform des erfindungsgemäßen Behälters die am Umfang seines schalenförmigen Teils angeordneten Durchführungskanäle gegenüber dessen Tiefe soweit verkürzt, dass zwischen ihnen und dem aufgeschweißten Behälterdeckel ein Freiraum gebildet ist, der die Montage des Behälters an der Befestigungsfläche dadurch erleichtert, dass die zur Befestigung dienenden Schrauben beim Ansetzen des Behälters an die Befestigungsfläche in dem Freiraum bewegt werden können.

Gemäß einer besonders bevorzugten Weiterbildung werden die später zur Befestigung des Behälters dienenden Schrauben behälterseitig bereits im Zuge der Fertigung des Behälters an diesem vormontiert. In Verbindung mit der bereits erwähnten Verliersicherung für die Schrauben wird so eine bedeutende Vereinfachung der Montage bei der Befestigung des Behälters an der dafür vorgesehenen Stelle, beispielsweise in einem schwer zugänglichen Bereich eines Kraftfahrzeugs, erreicht.

Selbstverständlich erfordert eine Durchführung von Befestigungsmitteln durch den Behälter an den betreffenden Positionen eine Abdichtung. Die Abdichtung kann zum Beispiel bei einem Durchführungskanal für eine Schraube durch eine Schweißnaht erreicht werden. In vorteilhafter Weise ist es dabei möglich, diese Schweißnaht, unter Vermeidung zusätzlicher Arbeitsgänge, im Zusammenhang mit dem Verschweißen von Behälterteilen, also beispielsweise eines schalenförmigen Behälterteils mit dem Behälterdeckel, zu erzeugen. Gemäß einer anderen vorteilhaften Weiterbildung sind an der mit der Befestigungsfläche in Kontakt zu bringenden Außenfläche des Behälters im Bereich des Durchtritts der Durchführungskanäle für die Schrauben Positionierhilfen vorgesehen. Hierdurch wird die Montage des Behälters bzw. seine Befestigung weiter vereinfacht.

Die Erfindung soll anhand eines Ausführungsbeispiels nochmals näher erläutert werden. In den zugehörigen Zeichnungen zeigen:
- Fig. 1:: Den erfindungsgemäßen Behälter in einer Frontansicht
- Fig. 2: Den Behälter nach der Fig. 1 in einer räumlichen Darstellung
- Fig. 3: Den Behälter mit Blick auf die mit der Befestigungsfläche in Kontakt zu bringende Außenfläche
- Fig. 4: Den Behälter in einer Draufsicht.

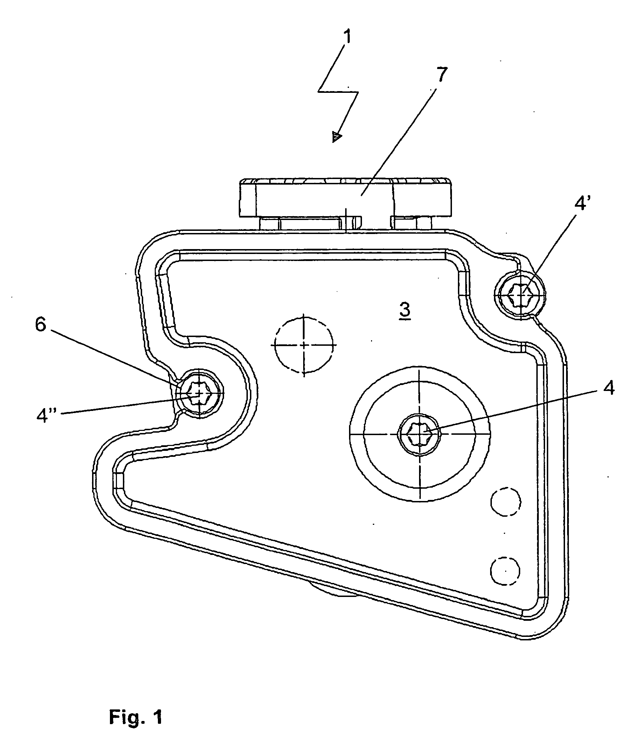

Die Fig. 1 zeigt den erfindungsgemäßen Behälter 1 in einer Frontansicht. Bei dem beispielhaft dargestellten Behälter 1 handelt es sich um einen Ölbehälter für eine Servolenkung zur Befestigung an einem Kraftfahrzeugmotor. Der Behälter 1 ist mittels Schrauben 4, 4', 4" an drei Punkten am hier nicht gezeigten Kraftfahrzeugmotor montierbar. Dem erfindungsgemäßen Grundgedanken folgend, ist eine Verschraubung durch das Behältervolumen hindurch geführt, wobei die verwendete Schraube 4 durch einen durch den Behälter 1 ragenden Durchführungskanal 5 geführt ist. Zwei weitere Schrauben 4', 4" greifen über am Umfang des Behälters 1 angeordnete Durchführungskanäle 5 direkt an der Befestigungsfläche respektive an einer Fläche des Kraftfahrzeugmotors an. Wie zu erkennen ist, sind im Bereich dieser beiden Schrauben 4', 4" auf dem Umfang des den Behälter 1 verschließenden Behälterdeckels 3 Ausnehmungen 6 vorgesehen, über die bei der Montage des Behälters 1 beispielsweise ein elektrischer oder pneumatischer Schrauber an die Schrauben 4', 4" herangeführt werden kann. Die Ausnehmungen 6 sind so bemessen, dass zwar das Werkzeug, jedoch nicht der Kopf der Schrauben 4', 4" durch sie hindurch passt. Durch den in dieser Weise ausgebildeten Behälterdeckel 3 wird somit für die Schrauben 4', 4" eine Verliersicherung ausgebildet, welche es ermöglicht, die Schrauben 4', 4" bereits im Zuge der Fertigung des Behälters 1 an diesem vorzumontieren.

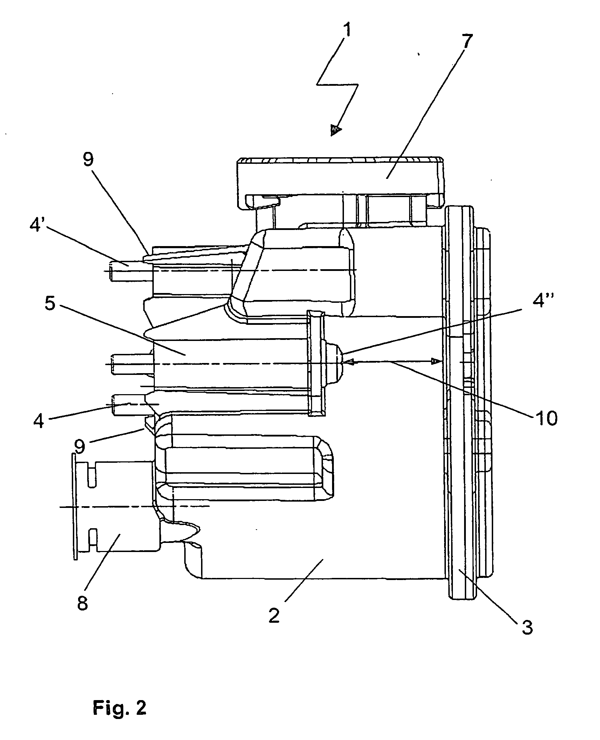

Der Behälter 1 besteht - in der Fig. 2 besser verdeutlicht - aus einem schalenförmigen Behälterteil 2, auf welches der in der Frontansicht nach der Fig. 1 zu sehende Behälterdeckel 3 aufgeschweißt wird. Im Zuge des Verschweißens wird gleichzeitig die durch das Behältervolumen geführte Verschraubung (mit Schraube 4) durch eine Schweißnaht gegen ein Austreten von Öl aus dem Behälter 1 abgedichtet. So erfordert zwar die Ausbildung des Behälters 1 mit einer durch das Behältervolumen geführten Verschraubung das Erzeugen einer zusätzlichen Schweißnaht für deren Abdichtung, jedoch verursacht dies, was fertigungstechnisch günstig ist, keinen weiteren Arbeitsgang, da die entsprechende Schweißnaht, wie bereits ausgeführt, im Zusammenhang mit dem ohnehin erforderlichen Verschweißen der Behälterteile 2, 3, beispielsweise durch Vibrationsschweißen, erzeugt wird.

Durch die Fig. 1 wird der durch die erfindungsgemäße Gestaltung des Behälters 1 gegebene Vorteil sehr gut deutlich. Der Behälter 1 kann, erkennbar, besonders platzsparend verbaut bzw. am Kraftfahrzeugmotor befestigt werden. Weder ist es erforderlich, auf dem Behälterumfang einen umlaufenden Falz oder Ösen zum Durchführen von Schrauben 4, 4', 4" vorzusehen, noch gelangen zusätzliche Teile, wie Spannbänder und Spannstifte zur Befestigung des Behälters 1 zum Einsatz. Dennoch und trotz der dadurch eng beieinander liegenden Verschraubungspunkte wird eine zuverlässige und stabile Verbindung des Behälters 1 mit der jeweiligen Befestigungsfläche erreicht.

Die Fig. 2 zeigt das zuvor erläuterte Ausführungsbeispiel in einer räumlichen bzw. perspektivischen Ansicht. Hier wird der zweiteilige Aufbau des Behälters 1 mit dem schalenförmigen Behälterteil 2 und dem darauf aufgeschweißten Behälterdeckel 3 erkennbar. Der Behälter 1 verfügt, wie zu ersehen, über einen Befüllstutzen 7 zum Einfüllen des Öls und zwei Anschlussstutzen 8, 8' zur Einbeziehung in einen Ölkreislauf. Außerdem erkennbar ist einer der Durchführungskanäle 5 durch welchen eine Schraube 4, der im Beispiel drei Schrauben 4, 4', 4" zur späteren Befestigung des Behälters 1 geführt ist. Vorzugsweise werden die Schrauben 4, 4', 4" bereits bei der Fertigung am Behälter vormontiert. Durch die besondere, bereits erläuterte Gestaltung des Behälterdeckels und die dadurch gegebene Verliersicherung wird dabei verhindert, dass die Schrauben 4', 4" aus den Durchführungskanälen 5 heraus gleiten. Für den Monteur, welcher den Behälter 1 verbaut, ergibt sich durch die Vormontage der Schrauben 4, 4', 4" eine bedeutende Vereinfachung. Für ihn entfällt die Vormontage und er kann mit der freien Hand problemlos einen zum Befestigen des Behälters 1 verwendeten Schrauber führen. Ein umständliches mehrfaches Umgreifen wird dabei vermieden. In der Fig. 2 sind außerdem die Positionierungshilfen 9 erkennbar, die dem Monteur bzw. Werker ein sicheres Positionieren des Behälters 1 an der Befestigungsfläche erleichtern.

Die am Behälterumfang angeordneten Durchführungskanäle 5 für die Schrauben 4', 4" sind, wie aus der Fig. 2 ebenfalls ersichtlich, gegenüber der Tiefe seines schalenförmigen Teils 2 soweit verkürzt, dass hierdurch ein hinreichender Freiraum 10 zur Handhabung bzw. Bewegung der Schrauben 4',4" gegeben ist. Hierdurch ist der Monteur beim Ansetzen des Behälters 1 an eine Befestigungsfläche nicht gezwungen, alle Schrauben 4, 4', 4" gleichzeitig in den vorgesehenen Bohrungen oder Gewinden zu positionieren, da es Schrauben 4', 4", die zunächst neben der Bohrung oder dem Gewinde auf der Befestigungsfläche auftreffen, möglich ist, in diesen Freiraum 10 zurückzurutschen. Hingegen wird ein gänzliches Herausfallen der Schrauben 4', 4" durch die bereits erläuterte Verliersicherung verhindert. Bei entsprechender Länge des Freiraums 10 können die Schrauben 4', 4" für den Fall, dass sie nicht bereits bei der Behälterfertigung vormontiert wurden, gegebenenfalls durch Verkanten auch seitlich in den jeweiligen Durchführungskanal 5 eingeführt werden, wobei dann allerdings keine zuverlässige Verliersicherung mehr gegeben ist.

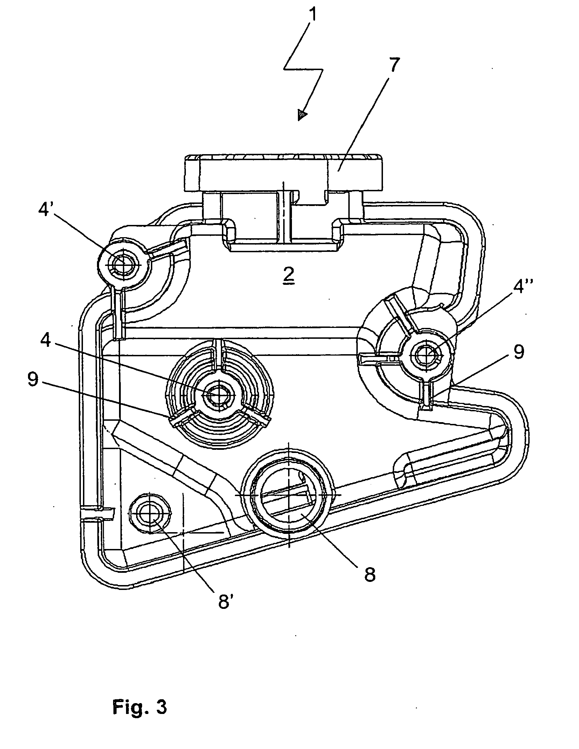

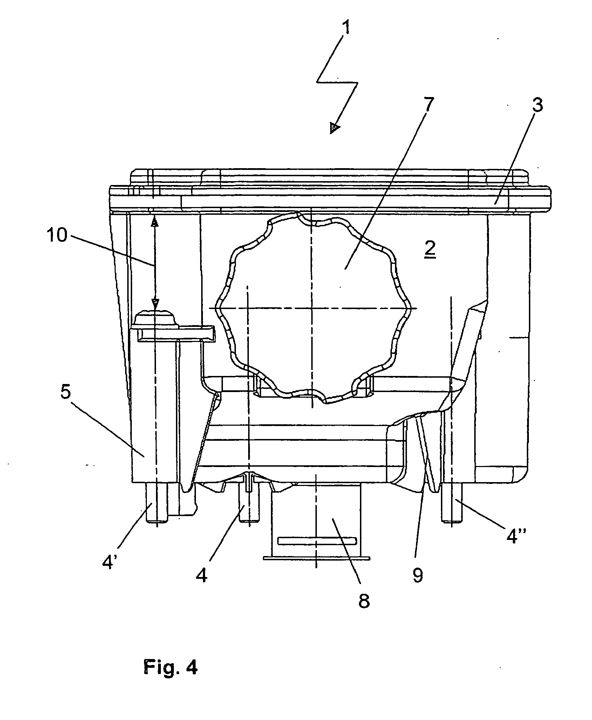

Die Fig. 3 zeigt den beschriebenen Behälter 1 nochmals mit Sicht auf seine später an der Befestigungsstelle in Kontakt gebrachte Außenseite. Gut zu erkennen ist hierbei die durch diese Fläche austretende, durch das Behältervolumen geführte Schraube 4. Weiterhin sind nochmals der Anschlussstutzen 8, 8' und die Positionierhilfen 9 erkennbar. In der Fig. 4 ist der Behälter 1 schließlich noch in einer Draufsicht dargestellt. In dieser Ansicht ist nochmals der durch die Verkürzung der Durchführungskanäle 5 geschaffene Freiraum 10 für die Schrauben 4', 4" gut erkennbar.

### Bezugszeichenliste

- 1: Behälter
- 2: schalenförmiger Behälterteil
- 3: Behälterdeckel
- 4, 4', 4": Befestigungsmittel, Schraube
- 5: Durchführungskanal
- 6: Ausnehmung
- 7: Befüllstutzen
- 8, 8': Anschlussstutzen
- 9: Positionierhilfe
- 10: Freiraum

## Patentansprüche

1. Behälter (1) für Öle oder Flüssigkeiten zur Befestigung an einer Befestigungsfläche,
wobei zumindest ein direkt an der Befestigungsfläche angreifendes Befestigungsmittel (4) flüssigkeitsdicht durch das Behältervolumen hindurchgeführt ist,
wobei der Behälter (1), ausgebildet als Ölbehälter zur Befestigung an einem Kraftfahrzeug, wenigstens eine durch das Behältervolumen geführte Verschraubung aufweist,
wobei der Behälter (1) mittels Schrauben (4, 4', 4") an der Befestigungsfläche befestigbar ist, welche durch am und/oder im Behälter angeordnete Durchführungskanäle (5) geführt sind,
wobei der Behälter (1) aus einem schalenförmigen Behälterteil (2) und einem darauf aufgeschweißten Behälterdeckel (3) besteht,
**dadurch gekennzeichnet, dass**
die Befestigung des Behälters (1) mittels wenigstens einer in einem Durchführungskanal (5) durch den Behälter (1) geführten Schraube (4) und mehrerer durch Durchführungskanäle (5) am Außenaußenumfang des schalenförmigen Behälterteils (2) geführter Schrauben (4', 4") erfolgt, wobei die am Umfang des schalenförmigen Behälterteils (1) angeordneten Durchführungskanäle (5) gegenüber dessen Tiefe verkürzt sind und auf dem Umfang des Behälterdeckels (3), im Bereich der Durchführungskanäle (5), Ausnehmungen (6) vorgesehen sind, die eine Verliersicherung ausbilden, derart, dass ein Herausgleiten der in den Durchführungskanälen eingeführten Schrauben verhindert ist.

2. Behälter (1) nach Anspruch 1, **dadurch gekennzeichnet, dass** die Durchführungskanäle (5) am Umfang des schalenförmigen Behälterteils (2) gegenüber der Tiefe dieses Behälterteils (2) soweit verkürzt sind, dass zwischen ihnen und dem aufgeschweißten Behälterdeckel (3) ein die Montage des Behälters (1) an der Befestigungsfläche erleichternder Freiraum (10) gebildet ist, in welchem die zur Befestigung dienenden Schrauben (4', 4") bewegbar sind.

3. Behälter (1) nach Anspruch 1 oder 2, **dadurch gekennzeichnet, dass** die Schrauben (4, 4', 4") zur Befestigung des Behälters behälterseitig vormontiert sind.

4. Behälter (1) nach Anspruch einem der vorhergehenden Ansprüche, **dadurch gekennzeichnet, dass** der oder die durch den Behälter geführten Durchführungskanäle gegenüber dem Behälter abgedichtet sind.

5. Behälter (1) nach einem der Ansprüche 4, **dadurch gekennzeichnet, dass** durch das Behältervolumen geführte Verschraubungen durch eine im Zuge des Verschweißens des schalenförmigen Behälterteils (2) mit dem Behälterdeckel (3) gefertigte Schweißnaht abgedichtet sind.

6. Behälter (1) nach einem der Ansprüche 3 bis 5, **dadurch gekennzeichnet, dass** an der mit der Befestigungsfläche in Kontakt zu bringenden Außenfläche des Behälters (1) im Bereich des Durchtritts der Durchführungskanäle (5) für die Schrauben (4, 4', 4") mindestens eine Positionierhilfe (9) für die Montage des Behälters (1) an der Befestigungsfläche ausgebildet ist.

## Claims

1. Container (1) for oils or liquids, for fixing to a fixing surface, wherein at least one fixing means (4) engaging directly on the fixing surface is guided in a liquid-tight manner through the container volume,
wherein the container (1), designed as an oil container which can be fixed to a vehicle, comprises at least one bolt connection guided through the container volume,
wherein the container (1) can be fixed by means of bolts (4, 4', 4") to the fixing surface, the bolts being guided through passage channels (5) arranged on and/or in the container,
wherein the container (1) consists of a bowl-shaped container part (2) and a container cover (3) welded thereon,
**characterised in that**
the fixing of the container (1) is effected by means of at least one bolt (4) guided in a passage channel (5) through the container (1) and by a plurality of bolts (4', 4") guided through passage channels (5) on the outer circumference of the bowl-shaped container part (2), wherein the passage channels (5) arranged on the circumference of the bowl-shaped container part (1) are shortened with respect to its depth, and recesses (6) are provided on the circumference of the container cover (3) in the region of the passage channels (5), which recesses form a safeguard so as to prevent the bolts introduced into the passage channels sliding out.

2. Container (1) according to claim 1, **characterised in that** the passage channels (5) on the circumference of the bowl-shaped container part (2) are shortened with respect to the depth of this container part (2) to such an extent that a free space is formed between them and the welded-on container part (3), which facilitates the mounting of the container (1) on the fixing surface, and in which the bolts (4', 4") serving for the fixing can move.

3. Container (1) according to claim 1 or 2, **characterised in that** the bolts (4, 4', 4") for fixing the container are premounted on the container.

4. Container (1) according to claim one of the preceding claims, **characterised in that** the passage channel or channels guided through the container are sealed with respect to the container.

5. Container (1) according to one of claims 4, **characterised in that** bolts guided through the container volume are sealed by a weld seam produced in the course of the welding of the bowl-shaped container part (2) to the container cover (3).

6. Container (1) according to one of claims 3 to 5, **characterised in that** at least one positioning aid (9) for the mounting of the container (1) on the fixing surface is formed on the outer surface of the container (1) to be brought into contact with the fixing surface, in the region of the penetration of the passage channels (5) for the bolts (4, 4', 4").

## Revendications

1. Récipient (1) pour huiles ou liquides, à fixer sur une surface de fixation,
dans lequel au moins un moyen de fixation (4) agissant directement sur la surface de fixation est passé de manière étanche aux liquides à travers le volume du récipient,
dans lequel le récipient (1), réalisé sous la forme d'un récipient à huiles à fixer à un véhicule automobile, présente au moins un vissage s'étendant à travers le volume du récipient,
dans lequel le récipient (1) est susceptible d'être fixé sur la surface de fixation au moyen de vis (4, 4', 4") qui sont guidées à travers des canaux de passage (5) disposés sur et/ou dans le récipient,
dans lequel le récipient (1) est constitué d'une partie de récipient (2) en forme de coque et d'un couvercle de récipient (3) soudé sur celle-ci,
**caractérisé en ce que**
la fixation du récipient (1) s'effectue au moyen d'au moins une vis (4), guidée dans un canal de passage (5) à travers le récipient (1), et de plusieurs vis (4', 4") guidées à travers des canaux de passage (5) sur le pourtour extérieur de la partie de récipient (2) en forme de coque, les canaux de passage (5), disposés sur le pourtour de la partie de récipient (1) en forme de coque, étant raccourcis par rapport à sa profondeur, et sur le pourtour du couvercle de récipient (3), dans la zone des canaux de passage (5), sont prévus des évidements (6) qui réalisent une projection contre la perte, de manière à empêcher un glissement à l'extérieur des vis introduites dans les canaux de passage.

2. Récipient (1) selon la revendication 1, **caractérisé en ce que** les canaux de passage (5) sur le pourtour de la partie de récipient (2) en forme de coque, sont raccourcis par rapport à la profondeur de cette partie de récipient (2), suffisamment pour qu'entre ceux-ci et le couvercle de récipient (3) soudé dessus, il soit réalisé un espace libre (10) facilitant le montage du récipient (1) sur la surface de fixation, espace libre dans lequel les vis (4', 4") servant à la fixation sont déplaçables.

3. Récipient (1) selon la revendication 1 ou 2, **caractérisé en ce que** les vis (4, 4', 4") pour la fixation du récipient sont prémontées côté récipient.

4. Récipient (1) selon l'une quelconque des revendications précédentes, **caractérisé en ce que** le ou les canaux de passage guidés à travers le récipient sont rendus étanches par rapport au récipient.

5. Récipient (1) selon la revendication 4, **caractérisé en ce que** les vissages, s'étendant à travers le volume du récipient, sont rendus étanches par un cordon de soudure réalisé au cours du soudage de la partie de récipient (2) en forme de coque avec le couvercle du récipient (3).

6. Récipient (1) selon l'une quelconque des revendications 3 à 5, **caractérisé en ce que** sur la surface extérieure du récipient (1), à amener en contact avec la surface de fixation, il est réalisé, dans la zone du passage des canaux de passage (5) pour les vis (4, 4', 4"), au moins une aide au positionnement (9) pour le montage du récipient (1) sur la surface de fixation.
